# EUROPÄISCHE PATENTSCHRIFT

(11) **EP 1 778 486 B1**
(45) Veröffentlichungstag und Bekanntmachung des Hinweises auf die Patenterteilung: **22.09.2010**
(21) Anmeldenummer: 05715451.0
(22) Anmeldetag: 22.02.2005
(51) Int. Cl.: B32B 27/36, B65D 65/46

(54) **PLA-FOLIE MIT GUTEN GLEIT- UND ANTISTATISCHEN EIGENSCHAFTEN**
PLA FILM WITH GOOD SLIDING AND ANTISTATIC PROPERTIES
FILM DE PLA AYANT DE BONNES PROPRIETES DE GLISSEMENT ET PROPRIETES ANTISTATIQUES

(30) Priorität: 25.02.2004 DE 102004009003
(43) Veröffentlichungstag der Anmeldung: 02.05.2007
(73) Patentinhaber: Treofan Germany GmbH & Co.KG, 66539 Neunkirchen (DE)
(72) Erfinder: DETLEF, Hütt, 66265 Heuseiler (DE)
(74) Vertreter: Kremer, Viola
(86) Internationale Anmeldenummer: PCT/EP2005/001834
(87) Internationale Veröffentlichungsnummer: WO 2005/080078

(56) Entgegenhaltungen:
- EP-A- 1 029 890
- EP-A- 1 108 751
- WO-A-02/087877
- US-A- 6 117 928
- US-A1- 2002 143 136

## Beschreibung

Die vorliegende Erfindung betrifft eine biaxial orientierte Folie, die mindestens eine Schicht umfasst, welche mindestens ein Polymeres aus mindestens einer aliphatischen Hydroxycarbonsäure, Glycerinfettsäureester sowie anorganische Antiblock-Partikel enthält. Die Erfindung betrifft ferner ein Verfahren zur Herstellung der Folie sowie ihrer Verwendung.

Folien aus thermoplastischen Kunststoffen werden in großem Umfang zur Verpackung von Lebensmitteln und anderen Packgütern eingesetzt. Für diese Verwendungen ist es wesentlich, daß die Folien gute antistatische und Gleitreibungs-Eigenschaften aufweisen.

Neuere Entwicklungen auf dem Verpackungsgebiet betreffen Folien aus biologisch abbaubaren Polyestern, wie beispielsweise Polymilchsäure (PLA). Derartige Folien gelten als besonders umweltverträglich, da sie auf nachwachsenden Rohstoffen basieren und durch Kompostierung entsorgt werden können. Diese Materialien unterscheiden sich jedoch grundlegend von den olefinischen Polymeren, wie Polyethylen oder Polypropylen, welche für Verpackungsfolien in großem Umfang eingesetzt werden. Auch die Übertragung der technischen Lehren über Polyesterfolien gelingt oft nicht, da die gleichen oder ähnliche Maßnahmen bei PLA-Folien oft nicht die erwünschte Wirkung erzielen.

Für den wirtschaftlichen Erfolg ist jedoch ein vergleichbar gutes Spektrum an Gebraucheigenschaften erforderlich, damit diese Folie mit den üblichen Verpackungstechnologien verarbeitet werden können. Hier spielt insbesondere die Antistatik in Verbindung mit den Gleiteigenschaften der Folie eine zentrale Rolle. Zahlreiche Untersuchungen haben gezeigt, daß sich die im boPP Bereich üblichen migrierenden Additive, die zur Verbesserung dieser Eigenschaften eingesetzt werden, in PLA nicht bewähren. Auf Grund des polaren Charakters der PLA Matrix zeigen diese migrierenden Additive ein ganz anderes Migrationsverhalten. Häufig gelangen diese Substanzen gar nicht oder in zu geringen Mengen an die Oberfläche.

Des weiteren ist es im Stand der Technik bekannt anorganische oder organische Antiblock-Partikel in den Deckschichten einer Folie, als Abstandshalter zwischen einzelnen Folienlagen einzusetzen. Die Antiblock-Partikel können durch Reduzierung der Kontaktfläche zwischen den Folienlagen das Abwickelverhalten einer Folienrolle verbessern und zusätzlich die Reibungseigenschaften zwischen Folienbahn und Führungsschiene an einer Verpackungsmaschine günstig beeinflussen.

In der deutschen Anmeldung Aktenzeichen 101 21 153.8 (WO2002087877) wird eine PLA Folie beschrieben, welche besonders hohe Mengen an Glycerinmonostearat zur Verbesserung der Antistatik enthält. Diese Folien sind jedoch noch immer verbesserungsbedürftig.

Der Zusatz von hohe Mengen an Partikeln ist bei bekannten Polyester-Folien aus Polyethylenterephtalat eine gute Lösung, aber diese Modifikation bewirkt bei PLA-Folien nicht die gewünschte Antistatik. Des weiteren kennt man aus der boPP-Folien Technologie verschiedene wirkungsvolle Kombinationen von migrierenden Additiven und partikelförmigen Antiblockmitteln. Es wurde daher nach möglichen Kombinationen aus migrierenden Additiven und partikelförmigen Zusatzstoffen gesucht, welche bei PLA-Folien eine weitere Verbesserung der Antistatik bewirken könnten. Im Rahmen dieser Untersuchungen wurde jedoch gefunden, daß der Einsatz von migrierenden Additiven in Verbindung mit partikelförmigen Zusatzstoffen bei PLA ebenfalls kritisch ist.

Es zeigte sich, daß einige Kombinationen sogar eine schlechtere Wirkung auf die Antistatik hatten, als Partikel oder Additiv jeweils alleine. Es wird vermutet, daß die partikelförmigen Zusatzstoffe in der PLA Matrix das Migrationsverhalten der Additive beeinflussen, beispielweise scheinen einige Partikelarten die Additive zu absorbieren, so daß sie in der Polymermatrix nahezu wirkungslos bleiben. Beispielsweise wurde überraschend gefunden, daß die Verwendung von Siliziumdioxid-Partikeln in Verbindung mit Glycerinmonostearat als migrierfähigem Antistatikum zu einer Erhöhung des elektrischen Oberflächenwiderstandes und zu einem erhöhten Reibungskoeffizienten führt.

EP-A-1 029 890 beschreibt eine Folie aus aliphatischen Polyestern, welche eine Additivkombination aus Weichmachern A und/oder B enthält, die nicht ausblühen. Die erste Komponente A ist ein Glycerinester, bei dem mindestens eine Ester-Gruppe 6 bis 18 C-Atome aufweist, wobei die verbleibenden Reste Wasserstoff oder eine Acyl Gruppe repräsentieren, Die zweite Komponente B ist Kondensat aus 1 bis 10 Glycerin Molekülen mit einer C6 bis C18-Carbonsäure, Die Weichmacher werden in einer Menge von 10 - 60 Teilen, bezogen auf das Gewicht des aliphatischen Polyester eingesetzt, d.h. die Mindestmenge beträgt entsprechend 9 Gew.-% bezogen auf das Gewicht der Mischung. Neben diesen Weichmachern, welche die Kristallinität der Folie herabsetzen, kann die Folie zusätzlich Antiblockmittel, Gleitmittel, Antistatika, Antibeschlag-Additive, UV-Absorber Antioxidant-Mittel, Pigmente oder Flammhemmer enthalten. Im Einzelnen werden 5 verschiedene mögliche Antiblockmittel angegeben, darunter Glimmer (Mica), sowie 4 verschiedene Antibeschlagmittel, darunter Glycerinmonostearat (GMS).

Die Aufgabe der vorliegenden Erfindung bestand darin, Folien für umweltfreundliche Verpackungen zur Verfügung zu stellen, welche aus nachwachsenden Rohstoffen hergestellt, umweltfreundlich entsorgt werden können und gute Antistatikeigenschaften aufweisen. Darüber hinaus sind gute Gleiteigenschaften und ein kleiner Reibungskoeffizient wünschenswert. Für bestimmte Anwendungsbereiche sind eine gute Transparenz und hohe Glanzwerte zusätzlich erforderlich.

Die Aufgabe wird gelöst durch eine coextrudierte mehrschichtige, transparente, biaxial orientierte Folie aus einer Basisschicht und mindestens einer Deckschicht, dadurch gekennzeichnet, daß die Deckschicht mindestens ein Polymeres aus mindestens einer aliphatischen Hydroxycarbonsäure und 1,5 bis 6 Gew.-% eines Glycerinfettsäureesters und >0 bis 0,5 Gew.-% Glimmer, jeweils bezogen auf das Gewicht der Deckschicht enthält und wobei die Deckschicht eine Dicke von 0,5 - 6µm aufweist,

Die Aufgabe wird auch gelöst durch eine coextrudierte, mehrschichtige biaxial orientierte opake oder weiße Folie aus einer Basisschicht und mindestens einer Deckschicht, dadurch gekennzeichnet, daß die Deckschicht mindestens ein Polymeres aus mindestens einer aliphatischen Hydroxycarbonsäure und 1,5 bis 6 Gew.-% eines Glycerinfettsäureesters und >0 bis 2 Gew.-% Glimmer, jeweils bezogen auf das Gewicht der Deckschicht enthält und wobei die Deckschicht eine Dicke von 0,5 - 6µm aufweist..

Überraschenderweise wirken Glimmer und der Glycerinfettsäureester in PLA in einer synergistischen Weise zusammen, deren Ursachen wissenschaftlich nicht vollständig verstanden sind. Für das Zusammenwirken kommt es wesentlich darauf an, daß sich der Glimmer und der Fettsäureester in ein und derselben Schicht befinden; nur dann verstärkt der Zusatz von Glimmer die antistatische Wirkung des Glycerinfettsäureesters. Überraschenderweise tritt dieses Zusammenwirken von Antiblockmittel und Gleitmittel bei dieser ausgewählten Kombination von Glimmer in Verbindung mit Glycerinfettsäureester auf. Diese Kombination war unter zahlreichen Additivmischungen, die Rahmen der Entwicklung zur vorliegenden Erfindung getestet wurden, nahezu die einzige Kombination, welche eine nachweisliche Verbesserung der Antistatik bewirkte. Viele Kombinationen waren sogar schlechter als Folien mit der jeweiligen Einzelkomponente.

Überraschenderweise beeinträchtigt Glimmer die antistatische Wirkung von GFS nicht, sondern trägt zu einer Verbesserung des Reibungskoeffizienten und der Antistatik bei. Der elektrische Oberflächenwiderstand wird bei Zugabe von Glimmer weiter erniedrigt. Damit können Folien zur Verfügung gestellt werden, die eine sehr gute Antistatik aufweisen, bzw. alternativ kann der Gehalt an GFS bei weniger kritischen Anwendungen zu Gunsten der Folienoptik reduziert werden.

Es wurde gefunden, daß die gemeinsame Einarbeitung von GFS und Glimmer in die Deckschicht wesentlich für die erwünschte Wirkung ist. Hierin unterscheidet sich die Erfindung von den bei boPP üblichen Rezepturierungen bei denen häufig die Einarbeitung der migrierenden Additive in die Basisschicht bevorzugt ist. Demgegenüber ist es für die vorliegende Erfindung bevorzugt der Basisschicht kein Glycerinfettsäureester zuzusetzen, wenngleich geringe Menge, beispielsweise über Regeneratzugaben nicht stören.

Erfindungsgemäß ist der Anteil an Glycerinfettsäureester, vorzugsweise, Glycerinmonostearinsäureester (GMS) in der Deckschicht ≥2 Gew.- %, bezogen auf das Gewicht der Deckschicht, um gute antistatische Eigenschaften zu erzielen. Ist der Glycerinfettsäureester (nachstehend GFS genannt) -Gehalt andererseits größer als 6 Gew.-%, kommt es zu nachteiligem Einfluß auf die optischen Eigenschaften der Folie, ohne daß eine weitere verbessernde Wirkung auf die antistatischen Eigenschaften erzielt wird. Weiterhin können die Siegeleigenschaften bei hohen Gehalten an GFS beeinträchtigt sein. Mehr als 6 Gew.-% GFS in der Deckschicht sind daher nicht bevorzugt.

Für die vorliegenden Erfindung sind Glycerinfettsäureester geeignet, bei denen eine, zwei oder alle drei Alkoholfunktionen mit einer Fettsäure verestert sind. Bevorzugt sind Monoester, bei welchen nur eine Alkoholgruppe des Glycerins mit einer Fettsäure verestert ist, sogenannte Glycerinmonofettsäureesfer. Geeignete Fettsäuren dieser Verbindungen haben eine Kettenlänge von 12 bis 20 C-Atomen. Bevorzugt sind Stearinsäure, Laurinsäure oder Ölsäure. Als besonders vorteilhaft hat sich Glycerinmonostearat (GMS) erwiesen.

Die bevorzugte Konzentration der Glycerinfettsäureester, vorzugsweise GMS beträgt 2,0 bis 8 Gew.-% insbesondere 3 -6 Gew.-% in der Deckschicht. Alle vorstehende Angaben bezgl. Der GMS-Menge in Gew.-% beziehen sich auf das Gewicht der Deckschicht.

Als Antiblock-Partikel wird Muskovit-Glimmer mit einer mittleren Partikelgröße (gewichtetes Mittel) von 4,0 - 12µm, insbesondere 6 bis 12 µm, besonders bevorzugt und in einer Konzentration von 0,05 bis maximal 0,30 Gew.-% (bezogen auf das Gewicht der Deckschicht) und insbesondere 0,10 - 0,20 Gew.-% eingesetzt. Bei höheren Konzentrationen, insbesondere oberhalb von 0,5 Gew.-%, kommt es zu einem nachteiligen Einfluß auf den Oberflächenglanz und die Trübung, der insbesondere bei weißen oder opaken Ausführungsformen jedoch gegebenenfalls in Kauf genommen werden kann. Opake oder weiße Ausführungsformen können daher bis zu 2 Gew.-% Glimmer in der Deckschicht aufweisen, wobei 0,5 bis 1,5 Gew.-% bevorzugt sind. Glimmer (engl. Mica) sind bekanntlich plättchenförmige Silikate, deren Partikelgestalt auch über sogenannte Formfaktoren (aspect ratio) beschrieben werden kann. Für die vorliegende Erfindung sind Glimmer mit einem Formfaktor von 5 bis 50, vorzugsweise 10 bis 30 bevorzugt.

In einer weiteren Ausführungsform kann anstelle oder zusätzlich zu dem Glimmer Calciumsilikat (Wollastonit) eingesetzt werden. Wollastonit sind nadelförmige Silikate, deren mittlere Nadellänge bis zu 150µm, vorzugsweise 50 bis 120 µm betragen kann. Der mittlere Durchmesser dieser Nadeln beträgt vorzugsweise 4 bis 10µm, vorzugsweise 6 bis 10µm. Überraschenderweise führen diese Wollastonite trotz ihrer Partikelgröße nicht wie erwartet zu einer erheblichen Eintrübung der Folie. Mischung aus diesen Antiblock-Partikeln oder gleichartigen Antiblock-Partikeln mit unterschiedlicher Partikelgröße zeigen ähnliche synergistische Wirkungen in Verbindung mit Glycerinfettsäureestern. Eine weitere Ausführungsform umfaßt eine Mischung aus Glimmer und Kaolin, welche in Verbindung mit GFS eingesetzt werden. Diese Kombination erweist sich ebenfalls als brauchbar, wenngleich Kaoline auf Grund ihrer üblichen kleinen Partikelgröße von weniger als 1µm als "Abstandshalter" wenig effektiv sind.

Die Zugabe von Glimmer, Calciumsilikaten oder Kaolin erfolgt in Form eines Masterbatches. Es ist jedoch auch möglich diese Komponenten während der Extrsuion bei der Folienherstellung direkt einzuarbeiten. Calciumsilikat (Wollastonit) oder Kaolin können in der Deckschicht jeweils einer Menge von 0,05 bis 0,3 Gew.-% enthalten sein, wobei in dieser Ausführungsform die Gesamtmenge an Antiblockmittelgehalt 0,5 Gew.-% bezogen auf die Deckschicht nicht überschreitet, d.h. der Gehalt an Glimmer wird entsprechend reduziert.

Die Dicke der Deckschicht liegt im allgemeinen in einem Bereich von 0,5 bis 6 µm, vorzugsweise 0,5 - 6µm, insbesondere 1 bis 3µm. Je dicker die Deckschicht ist, desto größer sollte der Partikeldurchmesser der Silikate gewählt werden. Antiblockteilchen zeigen im allgemeinen eine Tendenz während der Folienherstellung in der thermoplastischen Deckschicht einzusinken. Daher ist nur bei einer entsprechender Partikelgröße im Verhältnis zur Deckschicht sichergestellt, daß die Teilchen noch aus der Deckschicht herausragen und so als Abstandhalter funktionieren können.

Die antistatisch ausgerüstet Deckschicht enthält 70 bis < 98 Gew.%, vorzugsweise 80 bis <98 Gew.-% eines Polymeren aus mindestens einer aliphatischen Hydroxycarbonsäuren, nachstehend PHC (Polyhydroxycarbonsäuren) genannt. Hierunter sind Homopolymere oder Mischpolymerisate zu verstehen, welche aus polymerisierten Einheiten von aliphatischen Hydroxycarbonsäuren aufgebaut sind. Unter den für die vorliegende Erfindung geeigneten PHC sind insbesondere Polymilchsäuren geeignete. Diese werden nachstehend als PLA (Polylactidacid) bezeichnet. Auch hier sind unter dem Begriff PLA sowohl Homopolymere, welche nur aus Müchsäureeinheiten aufgebaut sind, als auch Mischpolymerisate zu verstehen, welche überwiegend Milchsäureeinheiten (>50%) in Verbindungen mit anderen aliphatischen Hydroxymilchsäureeinheiten enthalten.

Als Monomere der aliphatischen Polyhydroxycarbonsäure (PHC) sind insbesondere aliphatische Mono-, Di- oder Trihydroxycarbonsäuren, bzw. deren dimere cyclische Ester geeignet, worunter Milchsäure in ihrer D- oder L-Form bevorzugt ist Ein geeignetes PLA ist beispielsweise Polymilchsäure der Fa. Cargill Dow (NatureWorks®). Die Herstellung von Polymilchsäure ist im Stand der Technik bekannt und erfolgt über katalytische Ringöffnungspolymerisation von Lactid (1,4-Dioxan-3,6-dimethyl2,5-dion), dem dimeren cyclischen Ester der Milchsäure, daher wird PLA häufig auch als Polylactid bezeichnet. In den folgenden Veröffentlichungen ist die Herstellung von PLA beschrieben US 5,208,297, US 5,247,058 oder US 5,357,035.

Geeignet sind Polymilchsäuren, welche ausschließlich aus Milchsäureeinheiten aufgebaut sind. Hierbei sind insbesondere PLA Homopolymere bevorzugt, welche 80- 100 Gew.-% L-Milchsäureeinheiten, entsprechend 0 bis 20 Gew.-% D-Milchsäureeinheiten, enthalten. Zur Verringerung der Kristallinität können auch noch höhere Konzentrationen D-Milchsäureeinheiten als Comonomer enthalten sein. Gegebenenfalls kann die Polymilchsäure zusätzlich von der Milchsäure verschiedene aliphatische Polyhydroxycarbonsäureeinheiten als Comonomer aufweisen, beispielsweise Glycolsäureeinheiten, 3-Hydroxypropansäureeinhaiten, 2,2-Dimethyl-3-hydroxypropansäureeinheiten oder höhere Homologe der Hydroxycarbonsäuren mit bis zu 5 Kohlenstoffatomen.

Bevorzugt sind Müchsäurepolymere (PLA) mit einem Schmelzpunkt von 110 bis 170°C, vorzugsweise von 125 bis 165°C, und einen Schmelzflußindex (Messung DIN 53 735 bei 2,16 N Belastung und 190°C) von 1 bis 50g/10 min, vorzugsweise von 1 bis 30 g/10 min. Das Molekulargewicht des PLA liegt in einem Bereich von mindestens 10.000 bis 500.000 (Zahlenmittel), vorzugsweise 50.000 bis 300.000 (Zahlenmittel). Die Glasübergangstemperatur Tg liegt in einem Bereich von 40 bis 100°C, vorzugsweise 40 bis 80°C.

Für siegelfähige Ausführungsformen ist ein amorphes PLA für die Deckschicht bevorzugt. Derartige siegelfähigen PLA-Polymeren weisen eine Tg im Bereich von 50 bis 80°C auf. Die Siegelanspringtemperatur dieser Folien liegt in einem Bereich von 70 - 90°C. Die Deckschichtdicke dieser Siegelschichten liegen im Bereich von 0,5 bis 3µm, vorzugsweise 1 bis 2µm.

Die erfndungsgemässe Folie ist mehrschichtig aufgebaut und umfaßt mindestens die Basisschicht und mindestens eine coextrudierte antistatisch ausgerüstete Deckschicht aus PHC, Glycerinfettsäureester und Glimmer. Gegebenenfalls kann auf der gegenüberliegenden Seite der Folie eine weitere Deckschicht aufgebracht sein, wobei diese Deckschicht ebenfalls antistatisch mit GFS und Glimmer ausgerüstet oder unausgerüstet sein kann. Des weiteren ist es möglich zwischen der Basisschicht und der oder den Deckschichten zusätzlich eine oder beidseitig Zwischenschichten anzubringen, wodurch vier oder fünfschichtige Folien erhalten werden.

Die Basisschicht ist im Sinne der vorliegenden Erfindung diejenige Schicht, welche die größte Schichtdicke aufweist und im allgemeinen mehr als 40 % bis 98 %, vorzugsweise 50 bis 90 %, der Gesamtfoliendicke ausmacht. Die Deckschichten sind die Schichten, welche die äusseren Schichten der Folie bilden. Zwischenschichten sind naturgemäß zwischen der Basisschicht und den Deckschichten angebracht.

Unter transparenten Folien werden im Sinne der vorliegenden Erfindung solche Folien verstanden, deren Lichtdurchlässigkeit nach ASTM-D 1003-77 über 95 %, vorzugsweise über 75 %, liegt. Es wurde gefunden, daß die Einarbeitung der hohen Konzentrationen an GFS in die Deckschicht die Trübung der Folie nicht erhöht. Auch in dieser Hinsicht hat sich die Auswahl von GFS als antistatische Ausrüstung in der Deckschicht als überraschend vorteilhaft erwiesen.

Die Basischicht der Folie enthält im allgemeinen mindestens 90 bis <100 Gew.-%, vorzugsweise 95 bis 99 Gew.-%, bezogen auf das Gewicht der Schicht, Polymere aus mindestens einer Hydroxycarbonsäuren, nachstehend PHC (Polyhydroxycarbonsäuren) genannt. Hierunter sind Homopolymere oder Mischpolymerisate zu verstehen, welche aus polymerisierten Einheiten von, vorzugsweise aliphatischen, Hydroxycarbonsäuren aufgebaut sind. Unter den für die Basisschicht geeigneten PHC sind insbesondere Polymilchsäuren geeignete, darunter sowohl Homopolymere, welche nur aus Milchsäureeinheiten aufgebaut sind, als auch Mischpolymerisate, welche überwiegend Milchsäureeinheiten (>50%) in Verbindungen mit anderen aliphatischen Hydroxymilchsäureeinheiten enthalten.

Als Monomere der aliphatischen Polyhydroxycarbonsäure (PHC) sind insbesondere aliphatische Mono-, Di- oder Trihydroxycarbonsäuren, bzw. deren dimere cyclische Ester geeignet, worunter Milchsäure in ihrer D- oder L-Form bevorzugt ist. Ein geeignetes PLA ist beispielsweise Polymilchsäure der Fa. Cargill Dow (NatureWorks®). Die Herstellung von Polymilchsäure ist im Stand der Technik bekannt und erfolgt über katalytische Ringöffnungspolymerisation von Lactid (1,4-Dioxan-3,6-dimethyl2,5-dion), dem dimeren cyclischen Ester der Milchsäure, daher wird PLA häufig auch als Polylactid bezeichnet. In den folgenden Veröffentlichungen ist die Herstellung von PLA beschrieben US 5,208,297, US 5,247,058 oder US 5,357,035.

Bevorzugt sind Polymilchsäuren, welche ausschließlich aus Milchsäureeinheiten aufgebaut sind. Hierbei sind insbesondere PLA Homopolymere bevorzugt, welche 80- 100 Gew.-% L-Milchsäureeinheiten, entsprechend 0 bis 20 Gew.-% D-Milchsäureeinheiten, enthalten. Zur Verringerung der Kristallinität können auch noch höhere Konzentrationen D-Milchsäureeinheiten als Comonomer enthalten sein. Gegebenenfalls kann die Polymilchsäure zusätzlich von der Milchsäure verschiedene aliphatische Polyhydroxycarbonsäureeinheiten als Comonomer aufweisen, beispielsweise Glycolsäureeinheiten, 3-Hydroxypropansäureeinhaiten, 2,2-Dimethyl-3-hydroxypropansäureeinheiten oder höhere Homologe der Hydroxycarbonsäuren mit bis zu 5 Kohlenstoffatomen.

Bevorzugt sind Milchsäurepolymere (PLA) mit einem Schmelzpunkt von 110 bis 170°C, vorzugsweise von 125 bis 165°C, und einen Schmelzflußindex (Messung DIN 53 735 bei 2,16 N Belastung und 190°C) von 1 bis 50g/10 min, vorzugsweise von 1 bis 30 g/10 min. Das Molekulargewicht des PLA liegt in einem Bereich von mindestens 10.000 bis 500.000 (Zahlenmittel), vorzugsweise 50.000 bis 300.000 (Zahlenmittel). Die Glasübergangstemperatur Tg liegt in einem Bereich von 40 bis 100°C, vorzugsweise 40 bis 80°C.

Die Basisschicht sowie die übrigen Schichten der Folie, einschließlich der coextrudierten antistatisch ausgerüsteten Deckschicht können zusätzlich übliche Additive, wie Neutralisationsmittel, Stabilisatoren, Gleitmittel und Füllstoffe, enthalten. Sie werden zweckmäßig dem Polymer bzw, der Polymermischung bereits vor dem Aufschmelzen zugesetzt. Als Stabilisatoren werden beispielsweise Phosphorverbindungen, wie Phosphorsäure oder Phosphorsäureester, eingesetzt.

Für weiße oder opake Ausführungsformen der Folie können der Basisschicht Pigmente und/oder vakuoleninitierende Füllstoffe zugesetzt werden. Als Pigment TiO₂ bevorzugt und wird in einer Menge von 1-15 Gew.-%, vorzugsweise bis zu 10 Gew.-%, insbesondere 1 bis 8 Gew,-%, jeweils bezogen auf die Basisschicht, eingesetzt. Vakuoleninitierende Füllstoffe sind im allgemeinen in einer Menge von 3 bis 15 Gew.-%, vorzugsweise 5 bis 10 Gew.-% enthalten. Für diese Zwecke sind Cycloolefinpolymere bevorzugt, wie in EP 1385 899 beschrieben, auf welche hiermit ausdrücklich Bezug genommen wird.

Die Gesamtdicke der Folie kann innerhalb weiter Grenzen variieren und richtet sich nach dem beabsichtigten Verwendungszweck. Die bevorzugten Ausführungsformen der erfindungsgemäßen Folie haben Gesamtdicken von 4 bis 200 µm, wobei 8 bis 150 µm, insbesondere 10 bis 100 µm, bevorzugt sind. Die Dicke der gegebenenfalls vorhandenen Zwischenschicht/en beträgt im allgemeinen jeweils unabhängig voneinander 0,5 bis 15 µm, wobei Zwischenschichtdicken von 1 bis 10 µm, insbesondere 1 bis 8 µm, bevorzugt sind. Die angegebenen Werte beziehen sich jeweils auf eine Zwischenschicht. Die Dicke der zweiten Deckschicht/en wird unabhängig von den anderen Schichten gewählt und liegt bevorzugt im Bereich von 0,1 bis 5 µm, insbesondere 0,2 bis 3 µm, wobei die zweite Deckschichten bezüglich Dicke und Zusammensetzung verschieden von der ersten Deckschicht sein kann. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren.

Die Erfindung betrifft weiterhin ein Verfahren zur Herstellung der erfindungsgemäßen mehrschichtigen Folie nach dem an sich bekannten Koextrusionsverfahren.

Im Rahmen dieses Verfahrens wird so vorgegangen, dass die den Schichten der Folie entsprechende Schmelze/n durch eine Flachdüse koextrudiert werden, die so erhaltene mehrschichtige Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Verstreckung wird im allgemeinen sequentiell durchgeführt. Dabei wird vorzugsweise erst in Längsrichtung (d.h. in Maschinenrichtung, =MD-Richtung) und anschließend in Querrichtung (d.h. senkrecht zur Maschinenrichtung, =TD-Richtung) verstreckt. Dies führt zu einer Orientierung der Molekülketten. Das Verstrecken in Längsrichtung erfolgt bevorzugt mit Hilfe zweier entsprechend dem angestrebten Streckverhältnis verschieden schnell laufenden Walzen. Zum Querverstrecken benutzt man allgemein einen entsprechenden Kluppenrahmen. Die weitere Beschreibung der Folienherstellung erfolgt am Beispiel einer Flachfolienextrusion mit anschließender sequentieller Streckung.

Die Schmelze/n werden durch eine Flachdüse (Breitschlitzdüse) gepreßt, und die ausgepreßte Folie wird auf einer oder mehreren Abzugswalzen bei einer Temperatur von 10 bis 100°C, vorzugsweise 20 bis 80°C, abgezogen, wobei sie abkühlt und sich verfestigt.

Die so erhaltene Folie wird dann längs und quer zur Extrusionsrichtung gestreckt. Das Längsstrecken wird man vorzugsweise bei einer Walzentemperatur der Streckwalzen von 40 bis 130°C, vorzugsweise 50 bis 100°C zweckmäßigerweise mit Hilfe zweier entsprechend dem angestrebten Streckverhältnis verschieden schnell laufender Walzen durchführen und das Querstrecken vorzugsweise bei einer Temperatur von 50 bis 130°C, vorzugsweise 60 bis 120°C mit Hilfe eines entsprechenden Kluppenrahmens. Die Längsstreckverhältnisse können Bereich von 1,5 bis 8 variiert werden. Bei der Herstellung von Folien mit einer Basisschicht, die vakouleninitierende Füllstoffe enthält, ist ein höheres Längsstreckverhältnis von 3 bis 6 bevorzugt, wohingegen Folien mit einer transparenten Basisschicht vorzugsweise im Bereich von 1,5 bis 3,5 verstreckt werden. Die Querstreckverhältnisse liegen im Bereich von 3 bis 10, vorzugsweise 4 bis 7.

An die Streckung der Folie schließt sich ihre Thermofixierung (Wärmebehandlung) an, wobei die Folie konvergierend etwa 0,1 bis 10 s lang bei einer Temperatur von 60 bis 150°C gehalten wird (Konvergenz bis zu 25%). Anschließend wird die Folie in üblicher Weise mit einer Aufwickeleinrichtung aufgewickelt.

Es hat sich als besonders vorteilhaft erwiesen den Gycerinfettsäureester und/oder den Glimmer über ein Konzentrat in die Deckschicht der Folie einzuarbeiten. Es wurde gefunden, daß die Verteilung der Additive in der Deckschicht gleichmäßiger ist und die antistatischen Eigenschaften insgesamt besser sind als bei einer direkten Einarbeitung. Die Konzentrate können auf vergleichbaren Milchsäurepolymeren wie die Deckschicht oder die Basisschicht basieren. Gegebenenfalls ist auch der Einsatz von Mischungen aus Polyolefinen wie Polypropylen oder Polyethylen und GFS und/oder Partikel möglich, welche GFS und/oder Partikel in einer Menge von 20 bis 60 Gew.-% bezogen auf das Masterbatch, enthalten. Überraschenderweise zeigen Konzentrate auf polyolefinischer Basis die gleiche Wirkung, d.h. über das Konzentrat eingemischte Polyolefine beeinträchtigen die synergistische Wirkung der Glimmer-GFS-Kombination nicht.

Gegebenenfalls kann zur Einstellung weiterer Eigenschaften die Folie beschichtet werden. Typische Beschichtungen sind haftvermittelnde, schlupfverbessernd oder dehäsiv wirkende Schichten. Gegebenenfalls können diese zusätzlichen Schichten über in-line coating mittels wässriger Dispersionen vor der Querverstreckung oder off-line aufgetragen werden.

Die erfindungsgemäße Folie zeichnet sich durch sehr gute antistatische Eigenschaften aus. Hierdurch ist ein gute Handhabung der Folie beim Herstellen, Wickeln und Verarbeiten möglich. Daneben weisen transparente Ausführungsformen der erfindungsgemäßen Folie eine sehr gute Transparenz auf, welche durch den Zusatz der großen Mengen an GFS in Verbindung mit Glimmer in der Deckschicht überraschenderweise nicht beeinträchtigt wird. Zusätzlich zeigt sich, daß es bei der Herstellung der Folie nicht zu Problemen durch Ablagerungen oder Ausdampfungen kommt. Derartige Probleme sind beispielsweise beim Einsatz von GMS in Polypropylenfolien bekannt. Sie treten beim dem erfindungsgemäßen Herstellprozeß nicht auf. Zusätzlich zeigte sich, daß sich, daß die Folie die guten antistatischen Eigenschaften bereits unmittelbar nach der Herstellung aufweisen und zeitlich stabil bleiben. Auch dies ist ein klarer Vorteil gegenüber Folien deren Antistatik sich erst nach dem Ablauf von Migrationsvorgängen einstellt. Es wurde gefunden, daß durch den Zusatz von GMS in Verbindung mit dem Glimmer der spezifische Oberflächenwiderstand der Folie, gegenüber dem entsprechenden spezifische Oberflächenwiderstand von PLA, reduziert wird. Der spezifische Oberflächenwiderstand liegt erfindungsgemäß unterhalb von 10¹³ Ω/m². Des weiteren zeigt die Folie eine gute, d.h. niedrige Gleitreibung, wodurch die Lauf- und Verarbeitungseigenschaften zusätzlich günstig beeinflußt werden.

Zur Charakterisierung der Rohstoffe und der Folien wurden die folgenden Messwerte benutzt:
Antistatik:
   Die Messung des Oberflächenwiderstandes erfolgt gemäß DIN 53482 mit einer Federzungenelektrode, sowie die elektrische Aufladbarkeit nach DIN 57303.
Reibung
   Die Messung des Reibungskoeffizienten erfolgt gemäß ISO 8295.
Glanz
   Der Glanz wurde nach DIN 67530 bei einem Winkel von 20° gemessen

Die Erfindung wird nachstehend an Hand von Ausführungsbeispielen erläutert

### Beispiel 1:

Es wurde durch Extrusion und anschließende stufenweise Orientierung in Längs- und Querrichtung eine transparente dreischichtige PLA-Folie mit einer Dicke von etwa 30 µm hergestellt. Die Basisschicht bestand zu nahezu 100 Gew.-% aus einer Polymilchsäure mit einem Schmelzpunkt von etwa 160 °C. Die Schicht enthielt zusätzlich Stabilisatoren und Neutralisationsmittel in üblichen Mengen. Die Deckschichten, deren Dicke etwa 2,5 µm betrug, enthielt neben PLA 2 Gew.% GMS und 0,15 Gew.% Muskovit-Glimmer als Additive. Die Herstellbedingungen in den einzelnen Verfahrensschritten waren:

| | | |
|---|---|---|
| Extrusion: | Temperaturen | 170 - 200°C |
| | Temperatur der Abzugswalze: | 60°C |
| Längsstreckung: | Temperatur: | 68 °C |
| | Längsstreckverhältnis: | 2,0 |
| Querstreckung: | Temperatur: | 88 °C |
| | Querstreckverhältnis (effektiv): | 5,5 |
| Fixierung | Temperatur: | 75 °C |
| | Konvergenz: | 5 % |

Auf diese Weise wurde eine transparente Folie mit charakteristischem Glanz von ca. 130 bei einem Winkel von 20° und einem reduzierten spezifischen Oberflächenwiderstand von ca. 2*10¹² Ω/m² und einem COF von 0,20 erhalten.

### Beispiel 2:

Es wurde eine dreischichtige Folie wie in Beispiel 1 beschrieben. Der Gehalt an GMS wurde beibehalten. Im Unterschied zu Beispiel 1 wurde Calciumsilikat (Wollastonit) als Antiblock-Partikel verwendet. Die Menge des Calciumsilikates betrug wiederum 0,15 Gew.%. Es wurde ebenfalls eine transparente Folie mit Glanz von 125 (20°), einem reduzierten spezifische Oberflächenwiderstand von ca. 6*10¹² Ω/m² und verbessertem Gleitreibungskoeffizient (COF = 0,25) erhalten.

### Beispiel 3:

Es wurde eine dreischichtige Folie wie in Beispiel 1 beschrieben, jedoch mit einem geringeren Gehalt an GMS von 1,5 Gew.%, hergestellt. Als Antiblock-Partikeln wurde Muskovit-Glimmer in einer Konzentration von 0,15 Gew.% eingesetzt. Es wurde eine transparente Folie mit Glanz von 130 (20°) und geringer Trübung erhalten. Die Folie wies einen verminderten spezifischen Oberflächenwiderstand von ca. 8*10¹² Ω/m² und einen ausreichend guten Gleitreibungreibungskoeffizienten von 0,35 auf.

### Vergleichsbeispiel 1

Es wurde eine Folie wie in Beispiel 1 beschrieben hergestellt. Der Gehalt an GMS betrug 2,0 Gew.% wie in Beispiel 1. Im Unterschied zu Beispiel 1 wurde Siliziumdioxid (Grace Sylobloc 45) als Antiblock-Partikel in einer Konzentration von 0,15 Gew.% verwendet. Diese Folie zeigte weder gute antistatische Eigenschaften (spezifischer Oberflächenwiderstand 5*10¹³ Ω/m²) , noch einen verbesserten Gleitreibungskoeffizient (COF = 0,50).

### Vergleichsbeispiel 2

Es wurde eine Folie wie in Beispiel 1 beschrieben hergestellt. Im Unterschied zu Beispiel 1 wurde der Folie kein Glimmer zugesetzt. Sie enthielt daher nur 2 Gew.-% GMS in der Deckschicht. Die Folie besaß zwar gute antistatische Eigenschaften (spezifischer Oberflächenwiderstand 9*10¹² Ω/m²), aber einen nur mäßig verbesserten Gleitreibungskoeffizient (COF = 0,40).

### Vergleichsbeispiel 3

Es wurde eine Folie wie in Beispiel 1 beschrieben hergestellt. Im Unterschied zu Beispiel 1 wurde der Folie kein GMS zugesetzt. Sie enthielt daher nur 0,15 Gew.-% Glimmer in der Deckschicht. Vergleichsbeispiel 3 zeigte geringfügig verbesserte antistatische Eigenschaften (spezifischer Oberflächenwiderstand 2*10¹³ Ω/m²), jedoch einen für viele Anwendungen noch ausreichenden Gleitreibungskoeffizient (COF = 0,35).

### Vergleichsbeispiel 4

Es wurde eine Folie wie in Beispiel 1 beschrieben hergestellt. Im Unterschied zu Beispiel 1 enthielt die Folie jetzt 2 Gew.- % GMS in der Basisschicht. Der Deckschicht enthielt weiterhin 0,15 Gew.-% Glimmer, jedoch wurde kein GMS zugesetzt. Die Folie zeigte im Vergleich zum vorhergehenden Vergleichsbeispiel 3 weder verbesserte antistatische Eigenschaften (spezifischer Oberflächenwiderstand 1*10¹³ Ω/m²), noch einen verbesserten Gleitreibungskoeffizient (COF = 0,35).

| Beispiel | Antiblock | Menge in Gew.-% | GMS Menge in Gew.-% | Dynamischer Reibungs-koeffizient nach ISO 8295 | Oberflächenwiderstand in * 10¹² Ohm/m² | Glanz (20°) |
|---|---|---|---|---|---|---|
| Bsp.1 | Glimmer | 0,15 | 2,0 | 0,20 | 2 | 130 |
| Bsp. 2 | Ca-Silikat | 0,15 | 2,0 | 0,25 | 6 | 125 |
| Bsp. 3 | Glimmer | 0,15 | 1,5 | 0,35 | 8 | 130 |
| VB.1 | SiO₂ | 0,15 | 2,0 | 0,50 | 5 | 130 |
| VB. 2 | - | 0 | 2,0 | 0,40 | 9 | 130 |
| VB. 3 | Glimmer | 0,15 | 0 | 0,35 | 20 | 130 |
| VB. 4 | Glimmer | 0,15 | 2,0 * | 0,35 | 10 | 135 |

| | | | | | | |
|---|---|---|---|---|---|---|
| * 2% GMS befanden sich in der Basisschicht | | | | | | |

## Patentansprüche

1. Coextrudierte mehrschichtige transparente biaxial orientierte Folie aus einer Basisschicht und mindestens einer Deckschicht, **dadurch gekennzeichnet, daß** die Deckschicht mindestens ein Polymeres aus mindestens einer aliphatischen Hydroxycarbonsäure und 1,5 bis 6 Gew.-% eines Glycerinfettsäureesters und >0 bis 0,5 Gew.-% Glimmer, jeweils bezogen auf das Gewicht der Deckschicht enthält und wobei die Deckschicht eine Dicke von 0,5 - 6µm aufweist.

2. Folie nach Anspruch 1, **dadurch gekennzeichnet, daß** der Gehalt an Glycerinfettsäureesters 2 bis 8 Gew.-%, bezogen auf das Gewicht der Deckschicht beträgt.

3. Folie nach Anspruch 1 oder 2, **dadurch gekennzeichnet, daß** der Glycerinfettsäureester Glycerinmonostearat ist.

4. Folie nach einem der Ansprüche 1 bis 3, **dadurch gekennzeichnet, daß** das der Glimmer eine Partikelgröße von 4 - 12µm hat.

5. Folie nach einem der Ansprüche 1 bis 4, **dadurch gekennzeichnet, daß** das der Glimmer einen Formfaktor (aspect ratio) von 5 bis 50 hat.

6. Folie nach einem der Ansprüche 1 bis 5, **dadurch gekennzeichnet, daß** die Deckschicht 0,05 - 0,3 Gew.% Glimmer enthält.

7. Folie nach einem der Ansprüche 1 bis 6, **dadurch gekennzeichnet, daß** die Deckschicht zusätzlich Calciumsilikat (Wollastonit) oder Kaolin, enthält.

8. Folien nach Anspruch 7, **dadurch gekennzeichnet, daß** Calciumsilikat (Wollastonit) und/oder Kaolin jeweils einer Menge von 0,05 bis 0,3 Gew.-% enthalten ist, wobei die Gesamtmenge an Antiblockmittelgehalt 0,5 Gew.-% bezogen auf die Deckschicht nicht überschreitet.

9. Folien nach einem der Ansprüche 1 bis 8, **dadurch gekennzeichnet, daß** die Deckschicht 70 bis <98 Gew.-% eines Polymeren aus aliphatischer Hydroxycarbonsäure enthält

10. Folie nach Anspruch 9, **dadurch gekennzeichnet, daß** die aliphatische Hydroxycarbonsäure eine Polymilchsäure ist.

11. Folie nach einem der Ansprüche 1 bis 10, **dadurch gekennzeichnet, daß** die Basisschicht 90 bis <100Gew.-% Polymilchsäure enthält.

12. Folie nach einem der Ansprüche 1 bis 11, **dadurch gekennzeichnet, daß** die Deckschicht siegelfähig ist.

13. Folie nach einem der Ansprüche 1 bis 12, **dadurch gekennzeichnet, daß** die Folie einen Glanz von 120 bis 150 bei einem Winkel von 20° hat.

14. Folie nach einem der Ansprüche 1 bis 13, **dadurch gekennzeichnet, daß** die Folie einen Oberflächenwiderstand von ≤ 6*10¹² Ohm/m², vorzugsweise 1 bis ≤4*10¹² Ohm/m² hat.

15. Folie nach einem der Ansprüche 1 bis 14, **dadurch gekennzeichnet, daß** die Folie einen dynamischen Reibungskoeffizienten von < 0,30 insbesondere 0,05 bis 0,25 hat.

16. Coextrudierte, mehrschichtige biaxial orientierte opake oder weiße Folie aus einer Basisschicht und mindestens einer Deckschicht, **dadurch gekennzeichnet, daß** die Deckschicht mindestens ein Polymeres aus mindestens einer aliphatischen Hydroxycarbonsäure und 1,5 bis 6 Gew.-% eines Glycerinfettsäureesters und >0 bis 2 Gew.-% Glimmer, jeweils bezogen auf das Gewicht der Deckschicht enthält und wobei die Deckschicht eine Dicke von 0,5 - 6µm aufweist..

17. Folie nach Anspruch 16, **dadurch gekennzeichnet, daß** die Basisschicht TiO2, vorzugsweise in einer Menge von 1 bis 15 Gew.-% enthält.

18. Folie nach Anspruch 16, **dadurch gekennzeichnet, daß** die Basisschicht vakuoleninitierende Füllstoffe, vorzugsweise COC, enthält.

19. Folie nach Anspruch 16, **dadurch gekennzeichnet, daß** die Basisschicht vakuoleninitierende Füllstoffe, vorzugsweise COC, in einer Menge von 3 bis 15 Gew.-% enthält.

20. Folie nach Anspruch 16, **dadurch gekennzeichnet, daß** die Basisschicht vakuoleninitierende Füllstoffe und TiO2 enthält.

21. Verwendung einer Folie nach einem der Ansprüche 1 bis 20 als Verpackungsfolie.

22. Verfahren zur Herstellung einer Folie nach einem der Ansprüche 1 bis 20, **dadurch gekennzeichnet, daß** den Glycerinfettsäureester sowie die Antiblock-Partikeln über ein Konzentrat in die Deckschicht einarbeitet.

23. Verfahren nach Anspruch 22, **dadurch gekennzeichnet, daß** das Konzentrat auf einem Polyolefin, vorzugsweise Polyethylen oder Polypropylen, basiert

## Claims

1. Co-extruded, multilayer, transparent, biaxially oriented film consisting of a base layer and at least one top layer, **characterised in that** the top layer contains at least one polymer of at least one aliphatic hydroxycarboxylic acid and 1.5 to 6% by weight of a glycerin fatty acid ester and >0 to 0.5% by weight of mica, in each case relative to the weight of the top layer, and the top layer having a thickness of 0.5-6 µm.

2. Film according to Claim 1, **characterised in that** the content of glycerin fatty acid ester is 2 to 8% by weight, relative to the weight of the top layer.

3. Film according to Claim 1 or 2, **characterised in that** the glycerin fatty acid ester is glycerin monostearate.

4. Film according to one of Claims 1 to 3, **characterised in that** the mica has a particle size of 4-12 µm.

5. Film according to one of Claims 1 to 4, **characterised in that** the mica has a form factor (aspect ratio) of 5 to 50.

6. Film according to one of Claims 1 to 5, **characterised in that** the top layer contains 0.05-0.3% by weight of mica.

7. Film according to one of Claims 1 to 6, **characterised in that** the top layer additionally contains calcium silicate (wollastonite) or kaolin.

8. Film according to Claim 7, **characterised in that** calcium silicate (wollastonite) and/or kaolin is contained in each case in a quantity of 0.05 to 0.3% by weight, the total quantity of antiblocking agent content not exceeding 0.5% by weight, relative to the top layer.

9. Film according to one of Claims 1 to 8, **characterised in that** the top layer contains 70 to <98% by weight of a polymer of aliphatic hydroxycarboxylic acid.

10. Film according to Claim 9, **characterised in that** the aliphatic hydroxycarboxylic acid is a polylactic acid.

11. Film according to one of Claims 1 to 10, **characterised in that** the base layer contains 90 to <100% by weight of polylactic acid.

12. Film according to one of Claims 1 to 11, **characterised in that** the top layer is sealable.

13. Film according to one of Claims 1 to 12, **characterised in that** the film has a gloss of 120 to 150 at an angle of 20°.

14. Film according to one of Claims 1 to 13, **characterised in that** the film has a surface resistance of ≤6*10¹² Ohm/m², preferably 1 to ≤4*10¹² Ohm/m².

15. Film according to one of Claims 1 to 14, **characterised in that** the film has a dynamic coefficient of friction of <0.30, in particular 0.05 to 0.25.

16. Coextruded, multilayer, biaxially oriented, opaque or white film consisting of a base layer and at least one top layer, **characterised in that** the top layer contains at least one polymer of at least one aliphatic hydroxycarboxylic acid and 1.5 to 6% by weight of a glycerin fatty acid ester and >0 to 2% by weight of mica, in each case relative to the weight of the top layer, and the top layer having a thickness of 0.5-6 µm.

17. Film according to Claim 16, **characterised in that** the base layer contains Ti02, preferably in a quantity of 1 to 15% by weight.

18. Film according to Claim 16, **characterised in that** the base layer contains vacuole-initiating fillers, preferably COC.

19. Film according to Claim 16, **characterised in that** the base layer contains vacuole-initiating fillers, preferably COC, in a quantity of 3 to 15% by weight.

20. Film according to Claim 16, **characterised in that** the base layer contains vacuole-initiating fillers and TiO2.

21. Use of a film according to one of Claims 1 to 20 as packaging film.

22. Method for producing a film according to one of Claims 1 to 20, **characterised in that** the glycerin fatty acid ester and the antiblocking agent particles are incorporated into the top layer via a concentrate.

23. Method according to Claim 22, **characterised in that** the concentrate is based on a polyolefin, preferably polyethylene or polypropylene.

## Revendications

1. Feuille multicouche co-extrudée transparente et biaxialement orientée, constituée d'une couche de base et d'au moins une couche de couverture, **caractérisée en ce que** ladite couche de couverture contient au moins un polymère constitué d'au moins un acide carboxylique hydroxylé aliphatique et de 1,5 à 6 % en poids d'un ester d'acide gras et de glycérol ainsi que de > 0 à 0,5 % en poids de mica, respectivement par rapport au poids de la couche de couverture, ladite couche de couverture ayant une épaisseur comprise entre 0,5 et 6 µm.

2. Feuille selon la revendication 1, **caractérisée en ce que** la teneur dudit ester d'acide gras et de glycérol est comprise entre 2 et 8 % en poids, par rapport au poids de ladite couche de couverture.

3. Feuille selon les revendications 1 ou 2, **caractérisée en ce que** ledit ester d'acide gras et de glycérol est du monostéarate de glycérol.

4. Feuille selon l'une des revendications 1 à 3, **caractérisée en ce que** ledit mica a une taille des particules comprise entre 4 et 12 µm.

5. Feuille selon l'une des revendications 1 à 4, **caractérisée en ce que** ledit mica a un ratio d'aspect compris entre 5 et 50.

6. Feuille selon l'une des revendications 1 à 5, **caractérisée en ce que** ladite couche de couverture contient 0,05 à 0,3 % en poids de mica.

7. Feuille selon l'une des revendications 1 à 6, **caractérisée en ce que** ladite couche de couverture contient, en outre, du silicate de calcium (wollastonite) ou du kaolin.

8. Feuilles selon la revendication 7, **caractérisées en ce que** lesdits silicate de calcium (wollastonite) et/ou kaolin sont chacun contenus dans une quantité comprise entre 0,05 et 0,3 % en poids, la quantité totale de la teneur en agents anti-adhérents ne dépassant pas 0,5 % en poids, par rapport à la couche de couverture.

9. Feuilles selon l'une des revendications 1 à 8, **caractérisées en ce que** ladite couche de couverture contient 70 à < 98 % en poids d'un polymère constituée d'acide carboxylique hydroxylé aliphatique.

10. Feuille selon la revendication 9, **caractérisée en ce que** ledit acide carboxylique hydroxylé est de l'acide polylactique.

11. Feuille selon l'une des revendications 1 à 10, **caractérisée en ce que** ladite couche de base contient 90 à < 100 % en poids d'acide polylactique.

12. Feuille selon l'une des revendications 1 à 11, **caractérisée en ce que** ladite couche de couverture est apte au scellement.

13. Feuille selon l'une des revendications 1 à 12, **caractérisée en ce que** ladite feuille présente une brillance comprise entre 120 et 150, lorsque l'angle est de 20°.

14. Feuille selon l'une des revendications 1 à 13, **caractérisée en ce que** ladite feuille présente une résistance de surface de ≤ 6*10¹² Ohm/m², préférentiellement de 1 à ≤ 4*10¹² Ohm/m².

15. Feuille selon l'une des revendications 1 à 14, **caractérisée en ce que** ladite feuille présente un coefficient de frottement dynamique de < 0,30, notamment compris entre 0,05 et 0,25.

16. Feuille multicouche co-extrudée biaxialement orientée, opaque ou blanche, constituée d'une couche de base et d'au moins une couche de couverture, **caractérisée en ce que** ladite couche de couverture contient au moins un polymère constitué d'au moins un acide carboxylique hydroxylé aliphatique et de 1,5 à 6 % en poids d'un ester d'acide gras et de glycérol ainsi que de > 0 à 2 % en poids de mica, respectivement par rapport au poids de la couche de couverture, ladite couche de couverture ayant une épaisseur comprise entre 0,5 et 6 µm.

17. Feuille selon la revendication 16, **caractérisée en ce que** ladite couche de base contient du TiO₂, préférentiellement dans une quantité comprise entre 1 et 15 % en poids.

18. Feuille selon la revendication 16, **caractérisée en ce que** ladite couche de base contient des charges initiatrices de vacuoles, de préférence du COC.

19. Feuille selon la revendication 16, **caractérisée en ce que** ladite couche de base contient des charges initiatrices de vacuoles, de préférence du COC, dans une quantité comprise entre 3 et 15 % en poids.

20. Feuille selon la revendication 16, **caractérisée en ce que** ladite couche de base contient des charges initiatrices de vacuoles et du TiO₂.

21. Utilisation d'une feuille selon l'une des revendications 1 à 20 en tant que feuille d'emballage.

22. Procédé de fabrication d'une feuille selon l'une des revendications 1 à 20, **caractérisé en ce que** ledit ester d'acide gras et de glycérol ainsi que les particules anti-adhérents sont incorporés dans ladite couche de couverture à travers un concentré.

23. Procédé selon la revendication 22, **caractérisé en ce que** ledit concentré est basé sur une polyoléfine, de préférence sur un polyéthylène ou polypropylène.
